# EUROPEAN PATENT APPLICATION

(11) **EP 4 401 289 A1**
(43) Date of publication of application: **17.07.2024**
(21) Application number: 22910650.5
(22) Date of filing: 10.11.2022
(51) Int. Cl.: H02K 15/02, H01F 41/02, H02K 15/12, H05B 6/10, H05B 6/36

(54) **METHOD FOR MANUFACTURING STATOR AND DEVICE FOR MANUFACTURING STATOR**

(30) Priority: 22.12.2021 JP 2021208200
(71) Applicant: AISIN CORPORATION, Kariya-shi, Aichi 448-8650 (JP)
(72) Inventor: OKADA, Kazuaki, Kariya-shi, Aichi 448-8650 (JP); SUGIMOTO, Takashi, Kariya-shi, Aichi 448-8650 (JP); MATSUMURA, Toshiaki, Anjo-shi, Aichi 444-1154 (JP); NAGAMATSU, Yasuko, Anjo-shi, Aichi 444-1154 (JP)
(74) Representative: Kramer Barske Schmidtchen Patentanwälte PartG mbB
(86) International application number: PCT/JP2022/041915
(87) International publication number: WO 2023/119931

(57) **Abstract**

In a method for manufacturing a stator, a stress removing step is performed that is a step of removing residual stress in a laminated core caused by a stamping process by generating heat in the laminated core by applying a current to an induction heating coil placed in each of a plurality of slots.

## Description

### TECHNICAL FIELD

The present invention relates to methods for manufacturing a stator and devices for manufacturing a stator.

### BACKGROUND ART

Conventionally, a method for manufacturing a stator is known in which residual stress in a laminated core caused by a stamping process is removed by generating heat in the laminated core by applying a current to an induction heating coil. For example, Japanese Patent No. 6645163 (JP 6645163 B) discloses such a method for manufacturing a stator.

JP 6645163 A discloses a method for annealing a motor core (laminated core) by induction heating. In the method for annealing a motor core described in JP 6645163 B, a motor core including a plurality of slots is prepared by stacking punched (stamped) electrical steel sheets. Annular heating induction coils (induction heating coils) are then disposed outside and inside the motor core. A current is applied to the heating induction coils disposed outside and inside the motor core to generate heat in the entire motor core, so that distortion (residual stress) in the motor core caused by the punching process is removed.

### Related Art Documents

### Patent Documents

Patent Document 1: Japanese Patent No. 6645163 (JP 6645163 B)

### SUMMARY OF THE INVENTION

### Problem to be Solved by the Invention

In the method for annealing a laminated core described in JP 6645163 B, however, heat is generated in the entire laminated core when removing residual stress in the laminated core caused by the stamping process. In this case, it is necessary to generate heat in the entire laminated core and to slowly cool the entire laminated core after generating heat in the entire laminated core. Therefore, it takes a relatively long time to remove the residual stress. In other words, productivity decreases. Moreover, since heat is generated in the entire laminated core, this causes a large temperature change in each part of the laminated core, resulting in a large deformation of the laminated core. That is, a jig for reducing an increase in amount of deformation of the laminated core is required. Therefore, a method and device for manufacturing a stator are desired that can reduce the time required to remove residual stress and that can reduce an increase in amount of deformation of a laminated core when removing the residual stress.

The present invention was made to solve the above problems, and it is one object of the present invention to provide a method for manufacturing a stator and device for manufacturing a stator that can reduce the time required to remove residual stress and that can reduce an increase in amount of deformation of a laminated core when removing the residual stress.

### Means for Solving the Problem

In order to achieve the above object, a method for manufacturing a stator according to a first aspect of the present invention includes: a core forming step of forming, by a stamping process, a laminated core that is a stack of electrical steel sheets and that includes a plurality of teeth protruding in a radial direction and a plurality of slots formed between the plurality of teeth; and a stress removing step of, after the core forming step, removing residual stress in the laminated core caused by the stamping process by generating heat in the laminated core by applying a current to an induction heating coil placed in each of the plurality of slots.

As described above, the method for manufacturing a stator according to the first aspect of the present invention includes the stress removing step of removing residual stress in the laminated core caused by the stamping process by generating heat in the laminated core by applying a current to the induction heating coil placed in each of the plurality of slots. In the stress removing step, heat is thus locally generated in the regions around the plurality of slots in the laminated core, so that the residual stress in the laminated core caused by the stamping process can be locally removed from the regions around the plurality of slots in the laminated core. Accordingly, the time required to generate heat in the laminated core and the time required to slowly cool the laminated core are reduced and the amount of deformation of the laminated core is also reduced, compared to the case where heat is generated in the entire laminated core. As a result, the time required to remove the residual stress can be reduced, and an increase in amount of deformation of the laminated core when removing the residual stress can also be reduced. Residual stress is generated in the shear cut edges of the laminated core formed by the stamping process. The regions in the shear cut edges of the laminated core from which the residual stress needs to be removed are the regions around the plurality of slots where a large amount of magnetic flux flows when the stator is used as part of a rotating electrical machine. Based on this point, in the present invention, heat is locally generated in the regions around the plurality of slots in the laminated core.

In order to achieve the above object, a device for manufacturing a stator according to a second aspect of the present invention includes an induction heating coil configured in such a manner that a current is applied to the induction heating coil placed in each of a plurality of slots in a laminated core to generate heat in the laminated core and thus remove residual stress in the laminated core, the laminated core being a stack of electrical steel sheets and including a plurality of teeth protruding in a radial direction and the plurality of slots formed between the plurality of teeth.

As described above, the device for manufacturing a stator according to the second aspect of the present invention includes the induction heating coil configured in such a manner that a current is applied to the induction heating coil placed in each of the plurality of slots in the laminated core to generate heat in the laminated core and thus remove residual stress in the laminated core. As described above, the induction heating coil is used to locally generate heat in the regions around the plurality of slots in the laminated core, so that the residual stress in the laminated core can be locally removed from the regions around the plurality of slots in the laminated core. Accordingly, like the method for manufacturing a stator according to the first aspect of the present invention, the time required to generate heat in the laminated core and the time required to slowly cool the laminated core are relatively reduced and the amount of deformation of the laminated core is also reduced, compared to the case where heat is generated in the entire laminated core. As a result, like the method for manufacturing a stator according to the first aspect of the present invention, the time required to remove the residual stress can be reduced, and an increase in amount of deformation of the laminated core when removing the residual stress can also be reduced.

### Effects of the Invention

According to the present invention, as described above, it is possible to provide a method for manufacturing a stator and device for manufacturing a stator that can reduce the time required to remove residual stress and that can reduce an increase in amount of deformation of a laminated core when removing the residual stress.

### BRIEF DESCRIPTION OF THE DRAWINGS

[FIG. 1] FIG. 1 is a perspective view showing a stator according to first to fourth embodiments.
[FIG. 2] FIG. 2 is a diagram showing a manufacturing flow of the stator according to the first embodiment of the present invention.
[FIG. 3] FIG. 3 is a perspective view showing a laminated core in the manufacturing flow of the stator according to the first embodiment of the present invention.
[FIG. 4] FIG. 4 is a perspective view showing a device for manufacturing a stator according to the first embodiment of the present invention.
[FIG. 5] FIG. 5 is a partial enlarged perspective view showing the device for manufacturing a stator according to the first embodiment of the present invention.
[FIG. 6] FIG. 6 is a perspective view showing an induction heating coil of the device for manufacturing a stator according to the first embodiment of the present invention.
[FIG. 7] FIG. 7 is a sectional view of a distal end portion of the induction heating coil of the device for manufacturing a stator according to the first embodiment of the present invention, taken along a plane perpendicular to an axial direction.
[FIG. 8] FIG. 8 is a perspective view illustrating movement of the laminated core in the manufacturing flow of the stator according to the first embodiment of the present invention.
[FIG. 9] FIG. 9 is a diagram showing a manufacturing flow of the stator according to the second embodiment of the present invention.
[FIG. 10] FIG. 10 is a perspective view showing a device for manufacturing a stator according to the second embodiment of the present invention.
[FIG. 11] FIG. 11 is a diagram showing a manufacturing flow of the stator according to the third embodiment of the present invention.
[FIG. 12] FIG. 12 is a perspective view showing a device for manufacturing a stator according to the third embodiment of the present invention.
[FIG. 13] FIG. 13 is a diagram showing a manufacturing flow of the stator according to the fourth embodiment of the present invention.
[FIG. 14] FIG. 14 is a perspective view showing a device for manufacturing a stator according to the fourth embodiment of the present invention.
[FIG. 15] FIG. 15 is a perspective view showing a device for manufacturing a stator according to a modification of the second embodiment of the present invention.
[FIG. 16] FIG. 16 is a side view showing an induction heating coil of a device for manufacturing a stator according to a first modification of the first to fourth embodiments of the present invention.
[FIG. 17] FIG. 17 is a side view showing an induction heating coil of a device for manufacturing a stator according to a second modification of the first to fourth embodiments of the present invention.

### MODES FOR CARRYING OUT THE INVENTION

Hereinafter, embodiments of the present invention will be described with reference to the drawings.

### [Configuration of Stator of First to Fourth Embodiments]

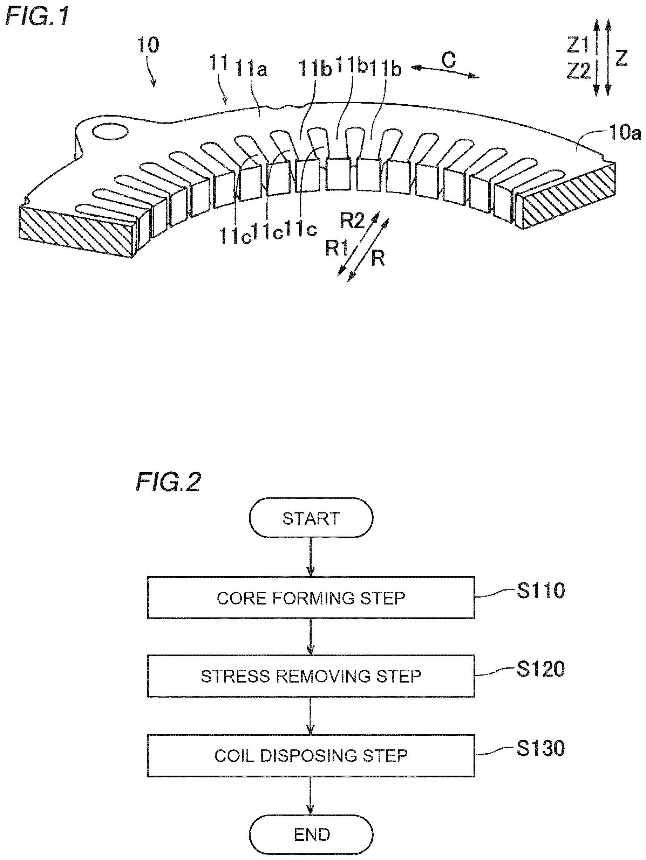

The configuration of a stator 10 according to first to fourth embodiments of the present invention will be described with reference to FIG. 1.

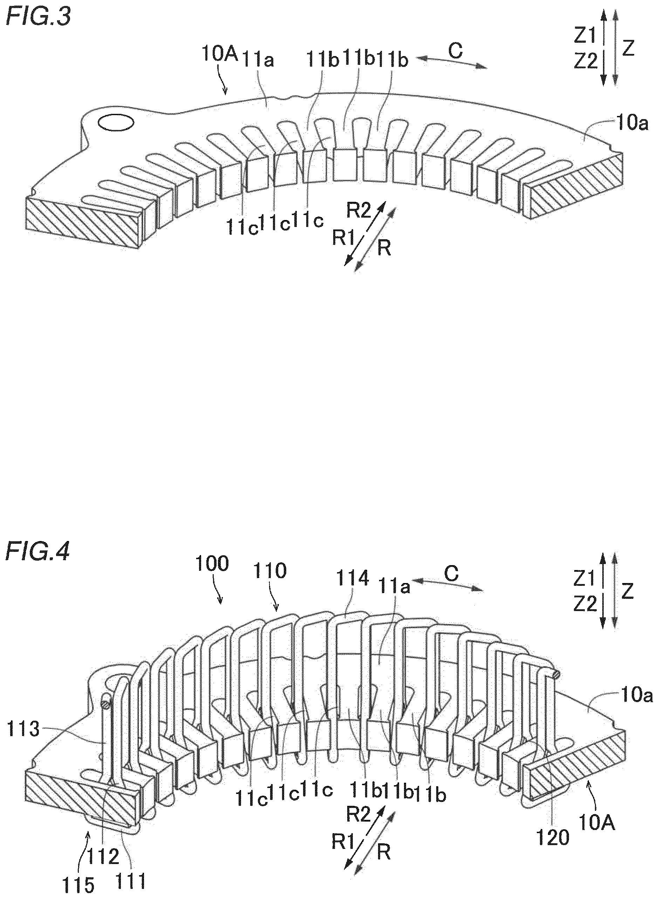

In the following description, the axial direction, radial direction, and circumferential direction of a stator core 11 (laminated core 10A (see FIG. 3)) of the stator 10 are defined as "Z direction," "R direction," and "C direction," respectively. One side and the other side in the axial direction (Z direction) are defined as "Z1 side" and "Z2 side," respectively. The inner side and the outer side in the radial direction (R direction) are defined as "R1 side" and "R2 side," respectively.

As shown in FIG. 1, the stator 10, together a rotor (not shown) disposed on the R1 side of the stator 10 so as to face the stator 10, constitutes part of an inner rotor rotating electrical machine (not shown). For example, the rotating electrical machine is a motor, a generator, or a motor generator.

The stator 10 includes the stator core 11 and a coil unit (not shown).

The stator core 11 has a cylindrical shape about a central axis (not shown) along the Z direction. The stator core 11 is formed by stacking a plurality of electrical steel sheets (e.g., silicon steel sheets) in the Z direction.

The stator core 11 includes an annular back yoke 11a and a plurality of teeth 1 1b protruding from the back yoke 11a to the R1 side. A slot 11c is formed between every two teeth 11b adjacent to each other in the C direction. In other words, the stator core 11 includes a plurality of slots 11c.

Each of the plurality of slots 11c is formed so as to extend in the Z direction. Each of the plurality of slots 11c is formed in the stator core 11 so as to be open on both sides in the Z direction. Each of the plurality of slots 11c is formed in the stator core 11 so as to be open on the R1 side.

The coil unit includes a plurality of slot-housed portions housed in the plurality of slots 11c. The coil unit also includes a plurality of coil end portions connecting the slot-housed portions housed in different slots 11c. The coil unit is made of copper wires. The coil unit is configured to generate a magnetic flux when supplied with three-phase alternating current power from a power supply unit (not shown).

### [Method for Manufacturing Stator and Device for Manufacturing Stator According to First Embodiment]

A manufacturing method of the stator 10 and a manufacturing device 100 of the stator 10 according to the first embodiment of the present invention will be described based on a manufacturing flow of the stator 10 according to the first embodiment with reference to FIGS. 2 to 8.

### (Core Forming Step)

As shown in FIG. 2, a core forming step is first performed in step 5110. As shown in FIG. 3, the core forming step (S110) is a step of forming, by a stamping process (punching process), the laminated core 10A that is a stack of electrical steel sheets and that includes the plurality of teeth 11b protruding in the radial direction (R direction) and the plurality of slots 11c formed between the plurality of teeth 11b. Specifically, the laminated core 10A is formed by punching a plurality of electrical steel sheets and then stacking the plurality of electrical steel sheets.

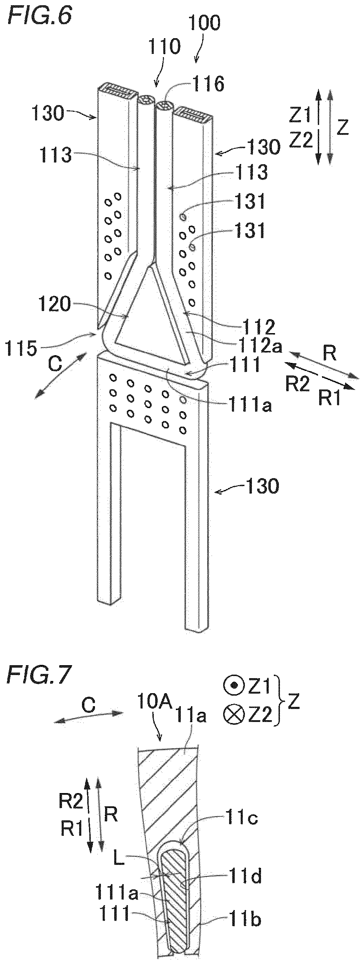

In the core forming step (S110), residual stress is generated in shear cut edges of the laminated core 10A formed by the punching process. The regions around the plurality of slots 11c in the shear cut edges are regions where a large amount of magnetic flux flows when the stator 10 is used as part of a rotating electrical machine. The "regions around the plurality of slots 11c in the shear cut edges" are the periphery (inner wall surface 11d (see FIG. 7)) of each of the plurality of slots 11c and the distal end of each of the plurality of teeth 11b. On the other hand, the end on the R2 side of the back yoke 11a out of the shear cut edges is a region where almost no magnetic flux flows when the stator 10 is used as part of a rotating electrical machine. Therefore, the regions in the shear cut edges of the laminated core 10A from which the residual stress needs to be removed are the regions around the plurality of slots 11c.

### (Stress Removing Step)

As shown in FIG. 2, a stress removing step is then performed in step S120. As shown in FIG. 4, the stress removing step (S120) is a step of removing the residual stress in the laminated core 10A caused by the stamping process (punching process) by generating heat in the laminated core 10A by applying a current to an induction heating coil 110 placed in each of the plurality of slots 11c. That is, the stress removing step (S120) is a step of annealing the laminated core 10A in order to remove the residual stress generated in the shear cut edges of the laminated core 10A. The stress removing step (S120) is performed using the manufacturing device 100 of the stator 10. The manufacturing device 100 of the stator 10 includes the induction heating coil 110. The induction heating coil 110 is a coil configured so that a current is applied to the coil placed in each of the plurality of slots 11c in the laminated core 10A to generate heat in the laminated core 10A and thus remove the residual stress in the laminated core 10A caused by the stamping process. Inert gas ejection units 130 that will be described later are not shown in FIG. 4.

As described above, in the stress removing step (S120), the induction heating coil 110 is used to locally generate heat in the regions around the plurality of slots 11c in the laminated core 10A, so that the residual stress in the laminated core 10A caused by the stamping process (punching process) can be locally removed from the regions around the plurality of slots 11c in the laminated core 10A. Accordingly, the time required to generate heat in the laminated core 10A and the time required to slowly cool the laminated core 10A are reduced and the amount of deformation of the laminated core 10A is also reduced, compared to the case where heat is generated in the entire laminated core 10A. As a result, the time required to remove the residual stress can be reduced, and an increase in amount of deformation of the laminated core 10A when removing the residual stress can also be reduced.

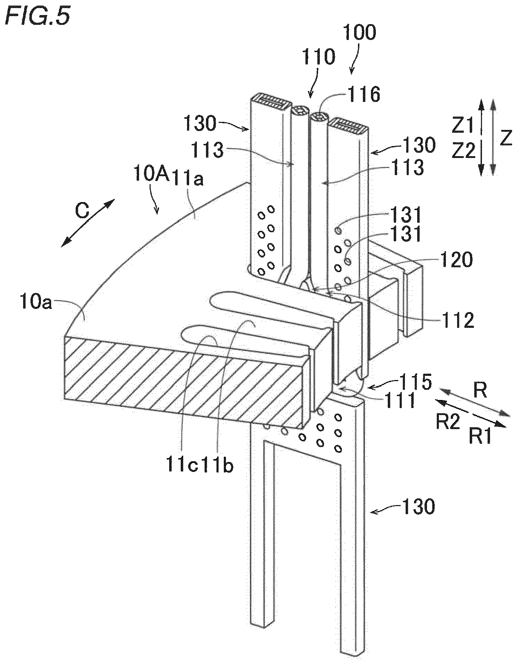

As shown in FIG. 5, the stress removing step (S120) is a step of generating heat in the laminated core 10A by applying a current to the induction heating coil 110 including a distal end portion 111 extending in the radial direction (R direction) and bent portions 112 bent at both radial ends of the distal end portion 111 in the axial direction (Z direction). Specifically, the induction heating coil 110 includes the distal end portion 111, the bent portions 112, axial extension portions 113, and a connecting portion 114 (see FIG. 4). As shown in FIG. 6, the distal end portion 111 extends in the R direction. The bent portions 112 are bent at both radial ends of the distal end portion 111 toward the Z1 side. The ends on the Z1 side of the bent portions 112 are connected to the axial extension portions 113 extending in the Z direction. As shown in FIG. 4, each connecting portion 114 extends in the C direction so as to connect the axial extension portions 113 that are adjacent to each other in the C direction.

As shown in FIG. 6, a region surrounded by the induction heating coil 110 can be formed by the distal end portion 111 and the pair of bent portions 112 as viewed in the circumferential direction (C direction). As a result, a magnetic flux tends to be intensively generated near the regions surrounded by the induction heating coil 110 compared to near regions not surrounded by the induction heating coil 110. Therefore, heat can be efficiently generated in the laminated core 10A using the regions surrounded by the induction heating coil 110.

The stress removing step (S120) is a step of generating heat in the laminated core 10A by applying a current to the induction heating coil 110 including a slot insertion portion 115 having, as viewed in the circumferential direction (C direction), a triangular shape including a base 111a as the distal end portion 111 extending in the radial direction (R direction) and legs 112a as the bent portions 112 extending in the axial direction (Z direction) from the base 111a. Specifically, the base 111a extending in the R direction and the pair of bent portions 112 form the slot insertion portion 115 having an isosceles triangle shape as viewed in the C direction.

A pair of opposing portions (pair of axial extension portions 113) that faces each other and through which a current flows in opposite directions is thus formed on the opposite side in the axial direction (Z direction) of the induction heating coil 110 from the base 111a of the triangular slot insertion portion 115. In the pair of opposing portions, magnetic fluxes generated by the currents flowing in the opposite directions cancel each other. That is, the pair of opposing portions that does not generate heat in the laminated core 10A is formed adjacent to the triangular slot insertion portion 115 that can generate heat in the laminated core 10A. This can prevent excessive heat generation near an end face 10a in the axial direction of the laminated core 10A when a current is applied to the induction heating coil 110 with the pair of opposing portions (pair of axial extension portions 113) located near the laminated core 10A in the axial direction (Z direction) as shown in FIG. 5. Excessive heat generation near the end face 10a in the axial direction of the laminated core 10A is not preferable because thermal deformation tends to occur due to the laminated core 10A consisting of a stack of a plurality of relatively thin electrical steel sheets.

As shown in FIG. 6, the stress removing step (S120) is a step of generating heat in the laminated core 10A by applying a current to the induction heating coil 110 with a ferrite core 120 placed in the inside portion surrounded by the induction heating coil 110 as viewed in the circumferential direction (C direction). Specifically, the manufacturing device 100 of the stator 10 includes the ferrite core 120. The ferrite core 120 is placed inside the isosceles triangular slot insertion portion 115 as viewed in the C direction.

The ferrite core 120 allows a magnetic flux generated by a current flowing in the portion of the induction heating coil 110 that is disposed so as to surround the ferrite core 120 (slot insertion portion 115) to be concentrated near the portion of the induction heating coil 110 that is disposed so as to surround the ferrite core 120 (slot insertion portion 115). As a result, it is possible to generate heat in the laminated core 10A more efficiently than when a current is applied to the induction heating coil 110 with no ferrite core 120 placed in the inside portion surrounded by the induction heating coil 110.

The ferrite core 120 has a shape that fits in the shape of the inner space of the slot insertion portion 115 as viewed in the C direction. That is, the ferrite core 120 has an isosceles triangle shape as viewed in the C direction. The ferrite core 120 is formed in the shape of a plate so as not to protrude beyond the induction heating coil 110 to either side in the C direction as viewed in the Z direction. The ferrite core 120 is fixed to the induction heating coil 110 with an adhesive (e.g., an epoxy resin adhesive) with an attachment interposed between the ferrite core 120 and the induction heating coil 110 (slot insertion portion 115). That is, when the laminated core 10A is moved in the Z direction with respect to the induction heating coil 110 (described later), the ferrite core 120 moves in the Z direction together with the laminated core 10A.

As shown in FIG. 7, the stress removing step (S120) is a step of generating heat in the laminated core 10A by applying a current to the induction heating coil 110 in which at least the portions of the induction heating coil 110 that are placed in the plurality of slots 11c (slot insertion portions 115) have a shape conforming to the shape of the inner wall surfaces 11d of the slots 11c as viewed in the axial direction (Z direction).

Accordingly, the distance L between at least the portion of the induction heating coil 110 that is placed in each of the plurality of slots 11c (slot insertion portion 115) when generating heat in the laminated core 10A by applying a current to the induction heating coil 110 and the inner wall surface 11d of the slot 11c is less likely to vary significantly from portion to portion of the induction heating coil 110. As a result, it is possible to generate heat in the laminated core 10A while reducing uneven heat generation of the laminated core 10A in those regions around the plurality of slots 11c in the laminated core 10A where heat is to be locally generated, compared to the case where at least the portions of the induction heating coil 110 that are placed in the plurality of slots 11c (slot insertion portions 115) does not have a shape conforming to the shape of the inner wall surfaces 11d of the slots 11c as viewed in the axial direction (Z direction).

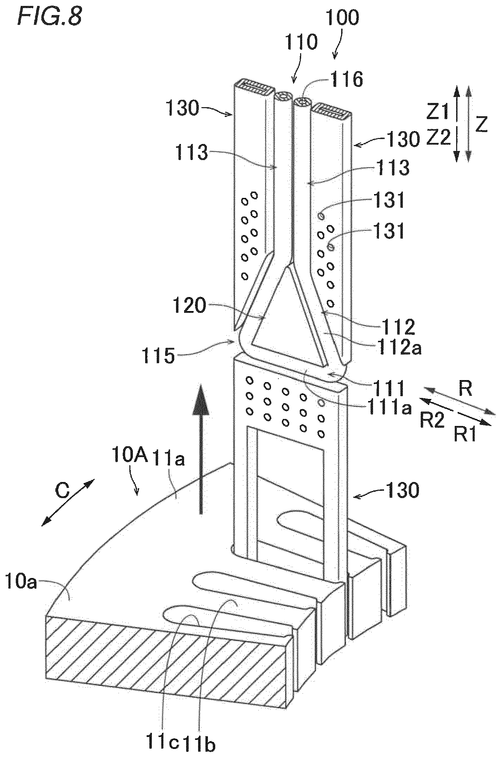

As shown in FIG. 8, the stress removing step (S120) is a step of generating heat in the laminated core 10A by applying a current to the induction heating coil 110 while changing the relative positions of the laminated core 10A and the induction heating coil 110 in the axial direction (Z direction). Specifically, the manufacturing device 100 of the stator 10 includes a core moving mechanism (not shown). The core moving mechanism is configured to move the laminated core 10A in the Z direction. In the stress removing step (S120), heat is generated in the laminated core 10A by applying a current to the induction heating coil 110 while moving the laminated core 10A in the Z direction with respect to the induction heating coil 110 by the core moving mechanism.

Accordingly, it is possible to generate heat in the laminated core 10A by applying a current to the induction heating coil 110 while changing in the axial direction (Z direction) the regions of the laminated core 10A where a large amount of heat is generated by applying a current to the induction heating coil 110. As a result, it is possible to generate heat in the laminated core 10A while reducing uneven heat generation of the laminated core 10A in those regions around the plurality of slots 11c in the laminated core 10A where heat is to be locally generated, compared to the case where a current is applied to the induction heating coil 110 with the relative positions of the laminated core 10A and the induction heating coil 110 being fixed.

The stress removing step (S120) is a step of generating heat in the laminated core 10A by applying a current to the induction heating coil 110 while ejecting inert gas from an inert gas ejection unit 130 provided separately from the induction heating coil 110 and configured so that its position relative to the laminated core 10A can be changed together with the induction heating coil 110. Specifically, the manufacturing device 100 of the stator 10 includes the inert gas ejection unit 130. The inert gas ejection unit 130 is configured so that inert gas is supplied thereinto. The inert gas ejection unit 130 has ejection holes 131 for ejecting inert gas from the inside of the inert gas ejection unit 130 to the outside. The inert gas ejection unit 130 is formed in the shape of a plate so as not to protrude beyond the induction heating coil 110 to either side in the C direction as viewed in the Z direction. The ejection holes 131 are provided in the surfaces on both sides in the C direction of the inert gas ejection unit 130 formed in the shape of a plate. The inert gas ejection unit 130 is fixed to the induction heating coil 110 with an adhesive (e.g., an epoxy resin adhesive) with an attachment interposed between the inert gas ejection unit 130 and the induction heating coil 110 (slot insertion portion 115). That is, when the laminated core 10A is moved in the Z direction with respect to the induction heating coil 110, the inert gas ejection unit 130 moves in the Z direction together with the laminated core 10A.

Accordingly, it is possible to generate heat in the laminated core 10A in the state where the oxygen concentration around the regions around the plurality of slots 11c in the laminated core 10A where heat is to be locally generated is reduced by the inert gas ejected from the inert gas ejection unit 130. As a result, it is possible to prevent oxidation of the laminated core 10A when generating heat in the laminated core 10A. Providing the inert gas ejection unit 130 whose position relative to the laminated core 10A changes together with the induction heating coil 110 and that ejects inert gas eliminates the need for a device that covers the entire laminated core 10A and that reduces the oxygen concentration inside (e.g., a vacuum chamber etc.). Since the inert gas ejection unit 130 is provided separately from the induction heating coil 110, a channel for passing a fluid other than the inert gas (e.g., a coolant channel 116 described later) can be provided inside the induction heating coil 110.

The coolant channel 116 for passing a coolant is formed inside the induction heating coil 110. In the stress removing step (S120), heat is generated in the laminated core 10A by applying a current to the induction heating coil 110 while passing the coolant through the coolant channel 116. Accordingly, although the induction heating coil 110 gets hot when a current is applied to the induction heating coil 110, degradation of the induction heating coil 110 due to excessively high temperatures can be reduced by passing the coolant through the coolant channel 116 provided inside the induction heating coil 110.

The stress removing step (S120) is a step of generating heat in the laminated core 10A by applying a current to the induction heating coil 110 placed in all of the slots 11c. Specifically, the induction heating coil 110 includes a plurality of slot insertion portions 115 corresponding to all the slots 11c of the laminated core 10A. The plurality of slot insertion portions 115 is connected in series with each other. A current is applied to the induction heating coil 110 with the slot insertion portions 115 placed in all the slots 11c of the laminated core 10A.

According to the above method, in the stress removing step (S120), residual stress in the regions around the plurality of slots 11c in the shear cut edges is removed, and the stator core 11 (see FIG. 1) in which the coil unit is to be disposed is formed.

### (Coil Disposing Step)

As shown in FIG. 2, a coil disposing step is then performed in step S130. The coil disposing step (S130) is a step of disposing the coil unit in the stator core 11 (see FIG. 1).

### [Method for Manufacturing Stator and Device for Manufacturing Stator According to Second Embodiment]

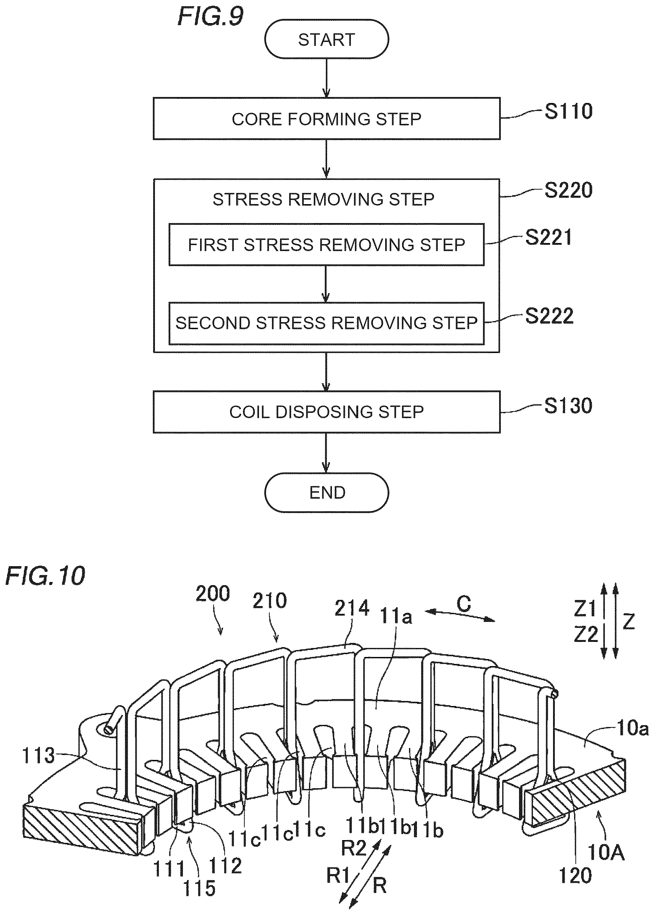

A manufacturing method of the stator 10 and a manufacturing device 200 of the stator 10 according to the second embodiment of the present invention will be described based on a manufacturing flow of the stator 10 according to the second embodiment with reference to FIGS. 9 and 10. In the figures, the same parts as those of the first embodiment are denoted by the same signs as those of the first embodiment.

### (Stress Removing Step)

As shown in FIG. 9, a stress removing step is performed in step S220. As shown in FIG. 10, like the stress removing step (S120) of the first embodiment, the stress removing step (S220) is a step of removing residual stress in the laminated core 10A caused by the stamping process (punching process) by generating heat in the laminated core 10A by applying a current to an induction heating coil 210 placed in each of the plurality of slots 11c. Like the stress removing step (S120) of the first embodiment, the stress removing step (S220) is performed using the manufacturing device 200 of the stator 10. The manufacturing device 200 of the stator 10 includes the induction heating coil 210.

In the stress removing step (S220), a first stress removing step (S221) and a second stress removing step (S222) are performed in this order. The first stress removing step (S221) is a step of generating heat in the laminated core 10A by applying a current to the induction heating coil 210 placed in every other slot 11c in the C direction out of the plurality of slots 11c as viewed in the Z direction. The second stress removing step (S222) is a step of generating heat in the laminated core 10A by applying a current to the induction heating coil 210 placed in those of the plurality of slots 11c in the C direction where the induction heating coil 210 to which a current is applied was not placed in the first stress removing step (S221). That is, the stress removing step (S220) is a step of repeating (N + 1) times the application of a current to the induction heating coil 210 placed in every Nth slot 11c in the circumferential direction (C direction) out of the plurality of slots 11c as viewed in the axial direction (Z direction), with the plurality of slots 11c in the circumferential direction (C direction) for placing the induction heating coil 210 being changed every time, where N = 1.

Specifically, the induction heating coil 210 includes a plurality of slot insertion portions 115 corresponding to half the slots 11c in the laminated core 10A so that the plurality of slot insertion portions 115 is placed in every other slot 11c in the C direction out of the plurality of slots 11c. In the first stress removing step (S221), with the induction heating coil 110 (slot insertion portions 115) placed in half of the plurality of slots 11c, a current is applied to the induction heating coil 210 to generate heat in the laminated core 10A. In the second stress removing step (S222), with the induction heating coil 110 (slot insertion portions 115) placed in the other half of the plurality of slots 11c, a current is applied to the induction heating coil 210 to generate heat in the laminated core 10A. After the first stress removing step (S221), the laminated core 10A is moved to change the slots 11c for placing the induction heating coil 210 (slot insertion portions 115) in order to perform the second stress removing step (S222).

Accordingly, in both cases where a current is applied to the induction heating coil 210 placed in every Nth slot 11c in the circumferential direction (C direction) out of the plurality of slots 11c (first stress removing step (S221) and second stress removing step (S222)), the induction heating coil 210 to which a current is applied is placed in every Nth slot 11c in the circumferential direction (C direction), so that the distance in the circumferential direction (C direction) between the induction heating coils 210 that are located adjacent to each other in the circumferential direction (C direction) and to which a current is applied is less likely to be reduced. As a result, unlike the case where a current is applied to the induction heating coil 210 placed in all of the slots 11c in the laminated core 10A, magnetic fluxes generated by the induction heating coils 210 that are located adjacent to each other in the circumferential direction (C direction) and to which a current is applied are less likely to cancel each other. In the case where a current is applied to the induction heating coil 210 placed in all the slots 11c in the laminated core 10A as in the stress removing step (S120) of the first embodiment, the overall heating time is reduced, but the size of the induction heating coil 210 is increased, which increases the equipment cost. However, in the case where a current is applied to the induction heating coil 210 placed in every Nth slot 11c in the circumferential direction (C direction) out of the plurality of slots 11c, the size of the induction heating coil 210 is reduced, so that an increase in equipment cost can be reduced.

Other configurations of the manufacturing method of the stator 10 and the manufacturing device 200 of the stator 10 according to the second embodiment are substantially the same as those of the manufacturing method of the stator 10 and the manufacturing device 100 of the stator 10 according to the first embodiment.

### [Method for Manufacturing Stator and Device for Manufacturing Stator According to Third Embodiment]

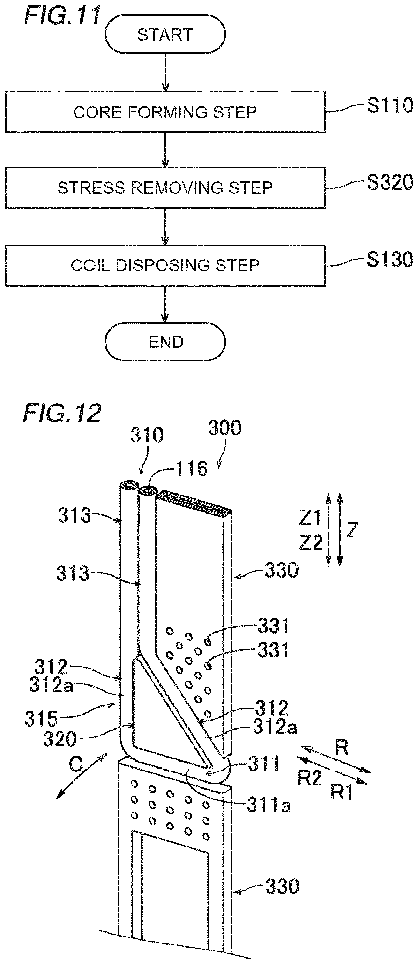

A manufacturing method of the stator 10 and a manufacturing device 300 of the stator 10 according to the third embodiment of the present invention will be described based on a manufacturing flow of the stator 10 according to the third embodiment with reference to FIGS. 11 and 12. In the figures, the same parts as those of the first embodiment are denoted by the same signs as those of the first embodiment.

### (Stress Removing Step)

As shown in FIG. 11, a stress removing step is performed in step S320. As shown in FIG. 12, like the stress removing step (S120) of the first embodiment, the stress removing step (S320) is a step of removing residual stress in the laminated core 10A caused by the stamping process (punching process) by generating heat in the laminated core 10A by applying a current to an induction heating coil 310 placed in each of the plurality of slots 11c. Like the stress removing step (S120) of the first embodiment, the stress removing step (S320) is performed using the manufacturing device 300 of the stator 10. The manufacturing device 300 of the stator 10 includes the induction heating coil 310.

Like the stress removing step (S120) of the first embodiment, the stress removing step (S320) is a step of generating heat in the laminated core 10A by applying a current to the induction heating coil 310 including a slot insertion portion 315 having, as viewed in the circumferential direction (C direction), a triangular shape including a base 311a as a distal end portion 311 extending in the radial direction (R direction) and legs 312a as bent portions 312 extending in the axial direction (Z direction) from the base 311a. Specifically, the induction heating coil 310 includes the distal end portion 311, the bent portions 312, axial extension portions 313. In the induction heating coil 310, unlike in the induction heating coil 110 of the first embodiment in which the slot insertion portion 115 having an isosceles triangle shape is formed, the base 311a extending in the R direction and the pair of bent portions 312 form the slot insertion portion 315 having a right triangle shape as viewed in the C direction.

The manufacturing device 300 of the stator 10 includes a ferrite core 320 like the induction heating coil 110 of the first embodiment. The ferrite core 320 is placed inside the right triangular slot insertion portion 315 as viewed in the C direction. The manufacturing device 300 of the stator 10 includes an inert gas ejection unit 330 like the induction heating coil 110 of the first embodiment.

Other configurations of the manufacturing method of the stator 10 and the manufacturing device 300 of the stator 10 according to the third embodiment are substantially the same as those of the manufacturing method of the stator 10 and the manufacturing device 100 of the stator 10 according to the first embodiment.

### [Method for Manufacturing Stator and Device for Manufacturing Stator According to Fourth Embodiment]

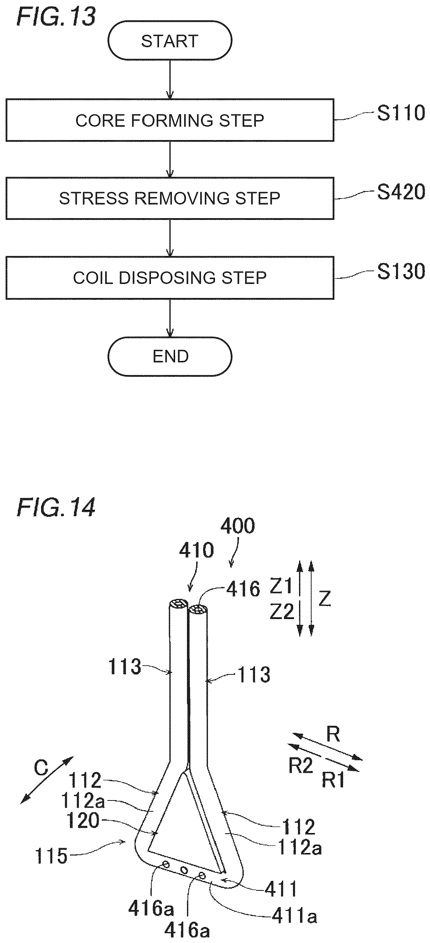

A manufacturing method of the stator 10 and a manufacturing device 400 of the stator 10 according to the fourth embodiment of the present invention will be described based on a manufacturing flow of the stator 10 according to the fourth embodiment with reference to FIGS. 13 and 14. In the figures, the same parts as those of the first embodiment are denoted by the same signs as those of the first embodiment.

### (Stress Removing Step)

As shown in FIG. 13, a stress removing step is performed in step S420. As shown in FIG. 14, like the stress removing step (S120) of the first embodiment, the stress removing step (S420) is a step of removing residual stress in the laminated core 10A caused by the stamping process (punching process) by generating heat in the laminated core 10A by applying a current to an induction heating coil 410 placed in each of the plurality of slots 11c. Like the stress removing step (S120) of the first embodiment, the stress removing step (S420) is performed using the manufacturing device 400 of the stator 10. The manufacturing device 400 of the stator 10 includes the induction heating coil 410.

The stress removing step (S420) is a step of generating heat in the laminated core 10A by applying a current to the induction heating coil 410 while passing inert gas through a gas channel 416 provided inside the induction heating coil 410 and ejecting the inert gas from gas ejection holes 416a in the induction heating coil 410. The gas channel 416 for passing inert gas is formed inside the induction heating coil 410. The gas channel 416 is configured so that inert gas is supplied thereto. The induction heating coil 410 has the gas ejection holes 416a for ejecting inert gas from the gas channel 416 inside the induction heating coil 410 to the outside. The gas ejection holes 416a are formed in the slot insertion portion 115. Although FIG. 14 shows an example in which the gas ejection holes 416a are formed in a distal end portion 111, the gas ejection holes 416a may be formed in the bent portions 112. Unlike the manufacturing device 100 of the first embodiment, the manufacturing device 400 of the stator 10 does not include the inert gas ejection unit 130 provided separately from the induction heating coil 110.

Accordingly, it is possible to generate heat in the laminated core 10A in the state where the oxygen concentration around the regions around the plurality of slots 11c in the laminated core 10A where heat is to be locally generated is reduced by the inert gas ejected from the gas ejection holes 416a of the induction heating coil 410. As a result, it is possible to prevent oxidation of the laminated core 10A when generating heat in the laminated core 10A.

Other configurations of the manufacturing method of the stator 10 and the manufacturing device 400 of the stator 10 according to the fourth embodiment are substantially the same as those of the manufacturing method of the stator 10 and the manufacturing device 100 of the stator 10 according to the first embodiment.

### [Modifications]

The embodiment disclosed herein should be construed as illustrative in all respects and not restrictive. The scope of the present invention is shown by the claims rather than by the above description of the embodiments, and includes all changes (modifications) that fall within the meaning and scope equivalent to the claims.

For example, the first to third embodiments illustrate an example in which the coolant channel 116 for passing a coolant is formed inside the induction heating coil 110. However, the present invention is not limited to this. In the present invention, the coolant channel for passing a coolant may not be formed inside the induction heating coil.

The first to fourth embodiments illustrate an example in which at least the portions of the induction heating coil 110 that are placed in the plurality of slots 11c (slot insertion portions 115) have a shape conforming to the shape of the inner wall surfaces 11d of the slots 11c as viewed in the axial direction (Z direction). However, the present invention is not limited to this. In the present invention, at least the portions of the induction heating coil that are placed in the plurality of slots (slot insertion portions) may have a shape that does not conform to the shape of the inner wall surfaces of the slots.

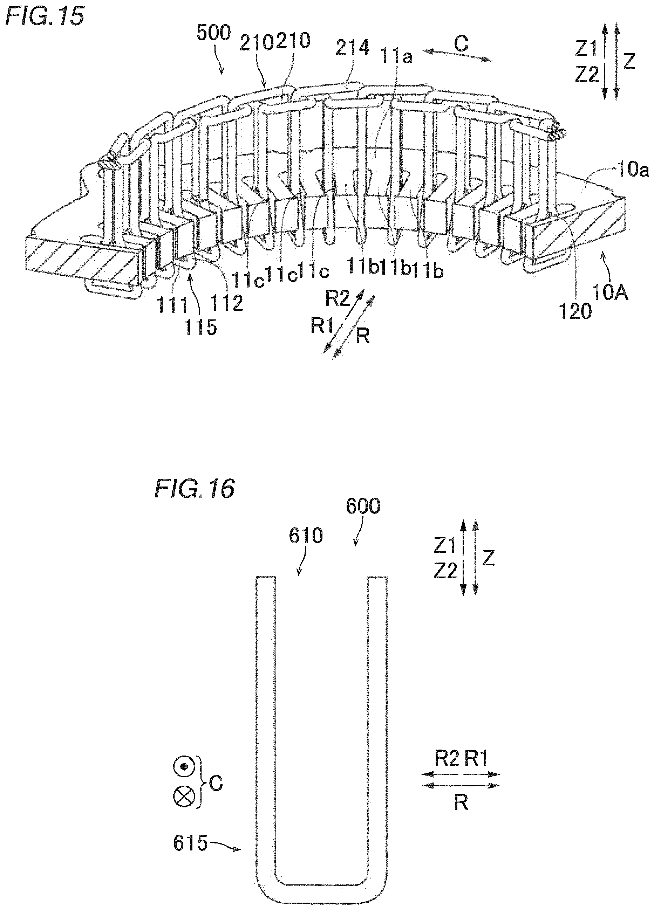

The second embodiment illustrates an example in which, after the first stress removing step (S221), the laminated core 10A is moved to change the slots 11c for placing the induction heating coil 210 (slot insertion portions 115) in order to perform the second stress removing step (S222). However, the present invention is not limited to this. In the present invention, as in a modification shown in FIG. 15, a manufacturing device 500 of the stator 10 including two sets of induction heating coils 210 may be used so that, after the first stress removing step (S221), the laminated core 10Ais not moved to change the slots 11c for placing the induction heating coil 210 (slot insertion portions 115) in order to perform the second stress removing step (S222).

The second embodiment illustrates an example in which the application of a current to the induction heating coil 210 placed in every Nth slot 11c in the circumferential direction (C direction) out of the plurality of slots 11c as viewed in the axial direction (Z direction) is repeated (N + 1) times with the plurality of slots 11c in the circumferential direction (C direction) for placing the induction heating coil 210 being changed every time, where N = 1. However, the present invention is not limited to this. In the present invention, N may be 2 or more. N can be set as desired in consideration of the number of slots in the laminated core, the size of the laminated core, etc. For example, N can be set to a large value when the number of slots in the laminated core is small and the radial length of the laminated core is small or the thickness (size in the axial direction) of the laminated core is small.

The fourth embodiment illustrates an example in which the gas channel 416 for passing inert gas is formed inside the induction heating coil 410 and the manufacturing device 400 of the stator 10 does not include the inert gas ejection unit 130 provided separately from the induction heating coil 110. However, the present invention is not limited to this. In the present invention, the gas channel for passing inert gas may not be formed inside the induction heating coil, and the manufacturing device of the stator may include the inert gas ejection unit provided separately from the induction heating coil. Alternatively, the gas channel for passing inert gas may be formed inside the induction heating coil, and the manufacturing device of the stator may include the inert gas ejection unit provided separately from the induction heating coil.

The first to third embodiments illustrate an example in which heat is generated in the laminated core 10A by applying a current to the induction heating coil 110 (210, 310) while ejecting inert gas from the inert gas ejection unit 130 (330) provided separately from the induction heating coil 110 (210, 310) and configured so that its position relative to the laminated core 10A can be changed together with the induction heating coil 110 (210, 310). However, the present invention is not limited to this. In the present invention, heat may be generated in the laminated core by applying a current to the induction heating coil while ejecting inert gas from the inert gas ejection unit that is provided separately from the induction heating coil and whose position relative to the laminated core does not change together with the induction heating coil.

The first to fourth embodiments illustrate an example in which heat is generated in the laminated core 10A by applying a current to the induction heating coil 110 (210, 310, 410) while moving the laminated core 10A with respect to the induction heating coil 110 (210, 310, 410) in the Z direction (axial direction) by the core moving mechanism. However, the present invention is not limited to this. In the present invention, heat may be generated in the laminated core by applying a current to the induction heating coil while moving the induction heating coil with respect to the laminated core in the axial direction, or heat may be generated in the laminated core by applying a current to the induction heating coil while moving both the induction heating coil and the laminated core with respect to each other in the axial direction.

The first to fourth embodiments illustrate an example in which the ferrite core 120 (320) is disposed in the inside portion surrounded by the induction heating coil 110 (210, 310, 410). However, the invention is not limited to this. In the present invention, the ferrite core may not be disposed in the inside portion surrounded by the induction heating coil.

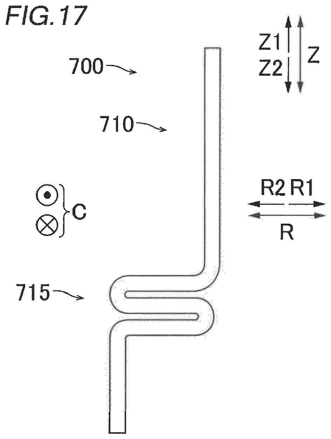

The first to fourth embodiments illustrate an example in which the induction heating coil 110 (210, 310, 410) includes the slot insertion portion 115 having a triangular shape as viewed in the circumferential direction (C direction). However, the present invention is not limited to this. In the present invention, as in a first modification shown in FIG. 16 and a second modification shown in FIG. 17, the induction heating coil may not include the slot insertion portion having a triangular shape as viewed in the circumferential direction. For example, as shown in FIG. 16, a manufacturing device 600 of the stator 10 includes an induction heating coil 610. The induction heating coil 610 includes a slot insertion portion 615 having a U-shape as viewed in the circumferential direction. Alternatively, as shown in FIG. 17, a manufacturing device 700 of the stator 10 includes an induction heating coil 710. The induction heating coil 710 includes a slot insertion portion 715 having, as viewed in the circumferential direction, a zigzag shape formed by bending back a plurality of times in the radial direction. In the configurations of the first modification shown in FIG. 16 and the second modification shown in FIG. 17, a gas channel for passing inert gas may be formed inside the induction heating coil, and the manufacturing device of the stator may include an inert gas ejection unit provided separately from the induction heating coil.

### Description of the Reference Numerals

10 ... stator, 10A ... laminated core, 11b ... tooth, 11c ... slot, 11d ... inner wall surface (of slot), 100, 200, 300, 400, 500, 600, 700 ... manufacturing device (of stator), 110, 210 , 310, 410, 610, 710 ... induction heating coil, 111, 311 ... distal end portion, 111a, 311a ... base, 112, 312 ... bent portion, 112a, 312a ... leg, 115, 315, 615, 715 ... slot insertion portion, 120, 320 ... ferrite core, 130, 330 ... inert gas ejection unit, 416 ... gas channel, 416a ... gas ejection hole

## Claims

1. A method for manufacturing a stator, the method comprising:
a core forming step of forming, by a stamping process, a laminated core that is a stack of electrical steel sheets and that includes a plurality of teeth protruding in a radial direction and a plurality of slots formed between the plurality of teeth; and
a stress removing step of, after the core forming step, removing residual stress in the laminated core caused by the stamping process by generating heat in the laminated core by applying a current to an induction heating coil placed in each of the plurality of slots.

2. The method for manufacturing a stator according to claim 1, wherein the stress removing step is a step of generating heat in the laminated core by applying a current to the induction heating coil including a distal end portion extending in the radial direction of the laminated core and bent portions bent at both radial ends of the distal end portion in an axial direction of the laminated core.

3. The method for manufacturing a stator according to claim 2, wherein the stress removing step is a step of generating heat in the laminated core by applying a current to the induction heating coil including a slot insertion portion having, as viewed in a circumferential direction of the laminated core, a triangular shape including a base as the distal end portion extending in the radial direction and legs as the bent portions extending in the axial direction from the base.

4. The method for manufacturing a stator according to claim 1, wherein the stress removing step is a step of generating heat in the laminated core by applying a current to the induction heating coil with a ferrite core placed in an inside portion surrounded by the induction heating coil as viewed in a circumferential direction of the laminated core.

5. The method for manufacturing a stator according to claim 1, wherein the stress removing step is a step of generating heat in the laminated core by applying a current to the induction heating coil while changing relative positions of the laminated core and the induction heating coil in an axial direction of the laminated core.

6. The method for manufacturing a stator according to claim 1, wherein the stress removing step is a step of generating heat in the laminated core by applying a current to the induction heating coil while ejecting inert gas from an inert gas ejection unit provided separately from the induction heating coil.

7. The method for manufacturing a stator according to claim 5, wherein the stress removing step is a step of generating heat in the laminated core by applying a current to the induction heating coil while ejecting inert gas from an inert gas ejection unit provided separately from the induction heating coil and configured in such a manner that a position of the inert gas ejection unit relative to the laminated core is changeable together with the induction heating coil.

8. The method for manufacturing a stator according to claim 1, wherein the stress removing step is a step of generating heat in the laminated core by applying a current to the induction heating coil while passing inert gas through a gas channel provided inside the induction heating coil and ejecting the inert gas from a gas ejection hole in the induction heating coil.

9. The method for manufacturing a stator according to claim 1, wherein the stress removing step is a step of repeating (N + 1) times application of a current to the induction heating coil placed in every Nth slot in a circumferential direction of the laminated core out of the plurality of slots as viewed in an axial direction of the laminated core, with the plurality of slots in the circumferential direction for placing the induction heating coil being changed every time.

10. The method for manufacturing a stator according to claim 1, wherein the stress removing step is a step of generating heat in the laminated core by applying a current to the induction heating coil in which at least portions of the induction heating coil that are placed in the plurality of slots have a shape conforming to a shape of an inner wall surface of the slot as viewed in an axial direction of the laminated core.

11. A device for manufacturing a stator, the device comprising an induction heating coil configured in such a manner that a current is applied to the induction heating coil placed in each of a plurality of slots in a laminated core to generate heat in the laminated core and thus remove residual stress in the laminated core, the laminated core being a stack of electrical steel sheets and including a plurality of teeth protruding in a radial direction and the plurality of slots formed between the plurality of teeth.
